# EUROPEAN PATENT APPLICATION

(11) **EP 4 622 242 A1**
(43) Date of publication of application: **24.09.2025**
(21) Application number: 25164106.4
(22) Date of filing: 17.03.2025
(51) Int. Cl.: H04N 1/113, B41J 2/47, G02B 26/12

(54) **LIGHT SCANNING APPARATUS AND IMAGE FORMING APPARATUS**

(30) Priority: 18.03.2024 JP 2024042112
(71) Applicant: KYOCERA Document Solutions Inc., Osaka-shi, Osaka, 540-8585 (JP)
(72) Inventor: Kyogoku, Masanori, Osaka-shi, 540-8585 (JP)
(74) Representative: Plougmann Vingtoft a/s

(57) **Abstract**

A light scanning apparatus (4) includes a board (70), a light-emitting module (71), a driver circuit (73), a control circuit (74), and an optical sensor (72). The board (70) has a first surface (701) and a second surface (702) on both sides in a thickness direction. The light-emitting module (71) is mounted on the board (70) and outputs light to a side of the first surface (701). The driver circuit (73) is mounted on the board (70) and drives the light-emitting module (71). The control circuit (74) is mounted on the board (70) and controls the driver circuit (73). The optical sensor (72) is mounted on the board (70) and receives, from the side of the first surface (701), scanning light (B0) from the light-emitting module (71) as a light source. The board (70) has a connection pad (704) that electrically connects the optical sensor (72) on the second surface (702).

## Description

### Incorporation by Reference

This application is based upon and claims the benefit of priority from the corresponding Japanese Patent Application No. 2024-042112 filed on March 18, 2024, the entire contents of which are incorporated herein by reference.

### Field

The present disclosure relates to a light scanning apparatus and an image forming apparatus.

### Background

As a related technology, a light scanning apparatus that is used for an image forming apparatus and scans a circumferential surface of a photoreceptor (photoreceptor drum) with scanning light (laser light) for exposure, thereby forming a latent image on the circumferential surface of the photoreceptor, is known. The light scanning apparatus includes a light-emitting module (laser light source) mounted on a board (circuit board). The light scanning apparatus reflects light emitted from the light-emitting module through a polygon mirror and scans the scanning light along a main scanning direction.

The light scanning apparatus further includes an optical sensor (BD sensor) that detects a deflected light flux and synchronizes a writing timing, which is a timing to start emission of the deflected light flux to the circumferential surface of the photoreceptor with respect to a main scanning line. In the light scanning apparatus according to the related technology, the light-emitting module and the optical sensor are mounted on the same surface of the board.

However, in the above configuration of the related technology, light (scanning light) from the light-emitting module may be reflected by a connection pad for bonding the optical sensor on the board, a bonding member, such as a solder, for bonding the optical sensor on the board, or a terminal of the optical sensor, with the result that stray light may be generated. The generated stray light may lead to erroneous detection of the optical sensor.

It is an object of the present disclosure to provide a light scanning apparatus and an image forming apparatus that make it difficult for erroneous detection of the optical sensor to occur.

### Summary

A light scanning apparatus according to an aspect of the present disclosure includes a board, a light-emitting module, a driver circuit, a control circuit, and an optical sensor. The board has a first surface and a second surface on both sides in a thickness direction. The light-emitting module is mounted on the board and outputs light to a side of the first surface. The driver circuit is mounted on the board and drives the light-emitting module. The control circuit is mounted on the board and controls the driver circuit. The optical sensor is mounted on the board and receives, from the side of the first surface, scanning light from the light-emitting module as a light source. The board has a connection pad that electrically connects the optical sensor on the second surface.

An image forming apparatus according to another aspect of the present disclosure includes: such a light scanning apparatus; and an image carrier on which a latent image is formed by a light beam output from the light scanning apparatus.

In accordance with the present disclosure, it is possible to provide a light scanning apparatus and an image forming apparatus that make it difficult for erroneous detection of an optical sensor to occur.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### Brief Description of Figures

Fig. 1 is a schematic view of an image forming apparatus according to Embodiment 1.
Fig. 2 is a schematic view of an image forming unit of the image forming apparatus according to Embodiment 1.
Fig. 3 is a schematic view of a light scanning apparatus of the image forming apparatus according to Embodiment 1.
Fig. 4 is a schematic plan view of the light scanning apparatus of the image forming apparatus according to Embodiment 1.
Fig. 5 is a schematic perspective view of the light scanning apparatus of the image forming apparatus according to Embodiment 1.
Fig. 6 is a schematic view as viewed from a side of a first surface of a board unit according to Embodiment 1.
Fig. 7 is a schematic view as viewed from a side of a second surface of the board unit according to Embodiment 1.
Fig. 8 is a schematic cross-sectional view of a cross section taken along the line A-A in Fig. 6, showing main parts of the board unit according to Embodiment 1.

### Detailed Description

Embodiments of the present disclosure will be described below with reference to the accompanying drawings. The following embodiments are merely examples embodying the present disclosure and do not limit the technical scope of the present disclosure.

### (Embodiment 1)

### [1] Overall configuration of image forming apparatus

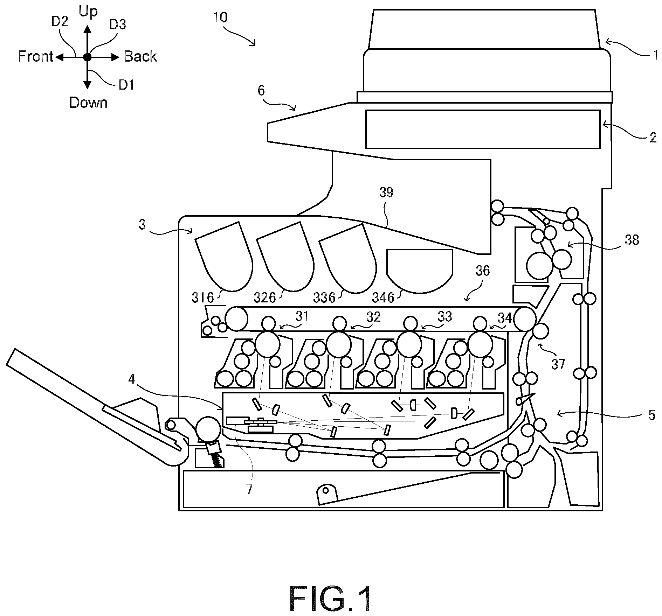

First of all, referring to Fig. 1, an overall configuration of an image forming apparatus 10 according to this embodiment will be described.

For the sake of description, the vertical direction is defined as an up-and-down direction D1 in an installed state in which the image forming apparatus 10 can be used (state shown in Fig. 1). Moreover, a front-and-back direction D2 is defined, assuming that a left surface of the image forming apparatus 10 in Fig. 1 is front (front surface). Moreover, a left-and-right direction D3 is defined on the basis of the front of the image forming apparatus 10 in the installed state.

The image forming apparatus 10 according to this embodiment is, for example, a multifunction peripheral device with a plurality of functions such as a scanner function of acquiring image data from a document, a printer function of forming an image on the basis of image data, a facsimile function, and a copier function. The image forming apparatus 10 only needs to have the function of forming an image. The image forming apparatus 10 may be a printer, a facsimile apparatus, a copying machine, or the like.

As shown in Fig. 1, the image forming apparatus 10 includes an automatic document conveying device 1, an image reading unit 2, an image forming unit 3, a light scanning device 4, a paper feeding unit 5, and an operation display unit 6. That is, the light scanning device 4 according to this embodiment constitutes the image forming apparatus 10 together with the image forming unit 3 and the like. The automatic document conveying device 1 is an auto document feeder (ADF), and therefore it will be referred to as "ADF 1" in the following description.

The ADF 1 conveys a document with image to be read by the image reading unit 2. The ADF 1 includes a document setting unit, a plurality of conveying rollers, a document holder, a paper receiving unit, and the like.

The image reading unit 2 reads an image from a document and outputs image data corresponding to the read image. The image reading unit 2 includes a document table, a light source, a plurality of mirrors, an optical lens, a charge coupled device (CCD), and the like.

The image forming unit 3 realizes the printer function by forming a color or monochrome image on a sheet by an electrophotographic method. The image forming unit 3 forms the image on the sheet on the basis of image data output from the image reading unit 2. Alternatively, the image forming unit 3 forms the image on the sheet on the basis of image data input from an information processing device outside the image forming apparatus 10, such as a personal computer.

The paper feeding unit 5 feeds a sheet to the image forming unit 3 The paper feeding unit 5 includes paper feed cassettes, a manual feed tray, a paper conveyance path, and a plurality of conveying rollers, and the like. The image forming unit 3 forms an image on a sheet fed from the paper feeding unit 5.

The operation display unit 6 is a user interface in the image forming apparatus 10. The operation display unit 6 includes a display unit, a control unit and an operation unit. The display unit displays various types of information in accordance with control instructions from a control unit. The display unit is a liquid-crystal display, for example. The operation unit inputs various types of information in the control unit in accordance with operations made by a user. The operation unit is a switch or a touch panel, for example.

The image forming apparatus 10 further includes a control unit, a storage unit, a communication unit, and the like. The control unit comprehensively controls the image forming apparatus 10. The control unit includes a computer system with one or more processors and one or more memories as main components. In the image forming apparatus 10, the one or more processors execute programs, thereby realizing the functions of the control unit. The programs may be recorded on a memory in advance. Alternatively, the programs may be provided via telecommunications lines, such as the Internet. Alternatively, the programs may be provided, recorded on a non-transitory recording medium readable by a computer system, such as a memory card or an optical disc. The storage unit includes one or more nonvolatile memories. Information such as control programs for the control unit to execute various types of processing is prestored in the one or more nonvolatile memories. The communication unit is an interface that executes data communication between the image forming apparatus 10 and an external device connected to the image forming apparatus 10 via a communication network, e.g., the Internet or a local area network (LAN).

### [2] Configuration of image forming unit

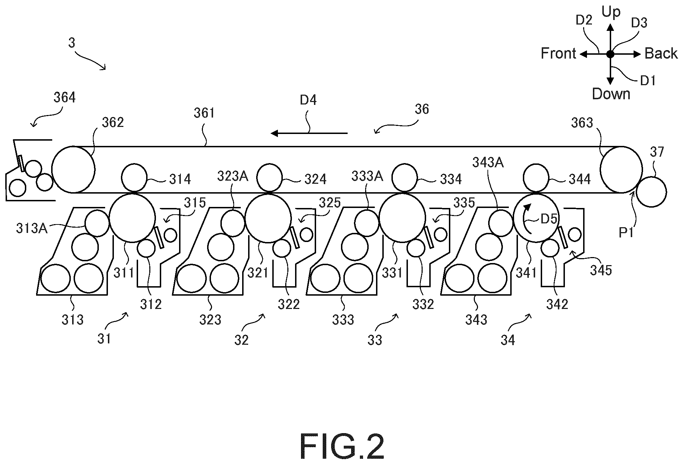

Next, referring to Figs. 1 and 2, a configuration of the image forming unit 3 will be described in more detail.

As shown in Fig. 1, the image forming unit 3 includes four image formation units 31 to 34, an intermediate transfer device 36, a secondary transfer roller 37, a fixing device 38, and a paper receiving tray 39.

The image formation unit 31 forms a toner image in Y (yellow). As shown in Fig. 2, the image formation unit 31 includes a photoreceptor drum 311, a charging roller 312, a developing device 313 including a developing roller 313A, a primary transfer roller 314, and a drum cleaner 315. The image formation unit 31 further includes a toner container 316 (see Fig. 1).

The image formation unit 32 forms a toner image in C (cyan). As shown in Fig. 2, the image formation unit 32 includes a photoreceptor drum 321, a charging roller 322, a developing device 323 including a developing roller 323A, a primary transfer roller 324, and a drum cleaner 325. The image formation unit 32 further includes a toner container 326 (see Fig. 1).

The image formation unit 33 forms a toner image in M (magenta). As shown in Fig. 2, the image formation unit 33 includes a photoreceptor drum 331, a charging roller 332, a developing device 333 including a developing roller 333A, a primary transfer roller 334, and a drum cleaner 335. The image formation unit 33 further includes a toner container 336 (see Fig. 1).

The image formation unit 34 forms a toner image in K (black). As shown in Fig. 2, the image formation unit 34 includes a photoreceptor drum 341, a charging roller 342, a developing device 343 including a developing roller 343A, a primary transfer roller 344, and a drum cleaner 345. The image formation unit 34 further includes a toner container 346 (see Fig. 1).

In this manner, a plurality of (here, four) image formation units 31 to 34 corresponds to four colors, Y (yellow), C (cyan), M (magenta), and K (black), respectively, and employs basically common configurations. Therefore, the other image formation units 31 to 33 have configurations similar to the configuration of the image formation unit 34 described below unless otherwise stated.

A latent image is formed on the photoreceptor drum 341. The photoreceptor drum 341 is supported by a unit casing that houses the photoreceptor drum 341, the charging roller 342, and the drum cleaner 345 to be rotatable about a rotational axis extending in a left-and-right direction D3 as its center. The photoreceptor drum 341 rotates to a direction of rotation D5 shown in Fig. 2 by a driving force received from a motor, for example.

The charging roller 342 positively charges a surface (outer circumferential surface) of the photoreceptor drum 341. Specifically, the charging roller 342 is electrically connected to a power supply circuit and charges the surface of the photoreceptor drum 341 by receiving a high voltage applied from the power supply circuit. Note that the charging roller 342 may negatively charge the surface of the photoreceptor drum 341, not limited to the positive charge.

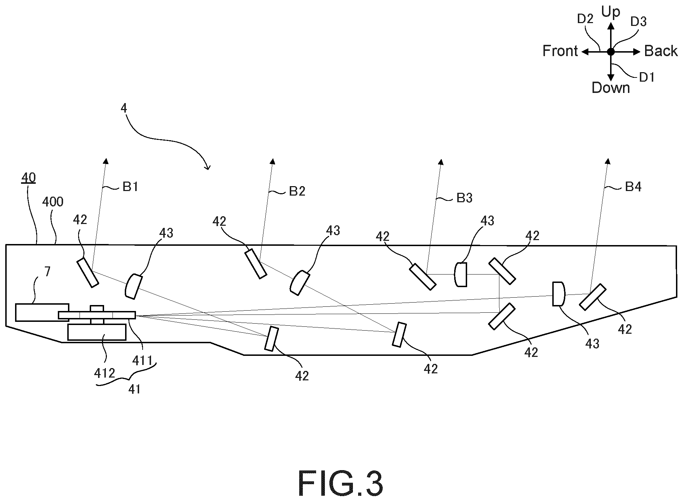

The surface of the photoreceptor drum 341 charged by the charging roller 342 is irradiated with a light beam B4 (see Fig. 3) based on image data from the light scanning device 4. Accordingly, a latent image is formed on the surface of the photoreceptor drum 341. That is, in this embodiment, the photoreceptor drum 341 is an example of an "image carrier" on which the latent image is formed by the light beam B4 output from the light scanning device 4.

The developing device 343 develops the latent image formed on the surface of the photoreceptor drum 341. For example, the developing device 343 includes a case, a pair of agitation members, a magnet roller, and the developing roller 343A. The case supports the pair of agitation members, the magnet roller, and the developing roller 343A to be rotatable about rotational axes extending in the left-and-right direction D3 as their centers. Moreover, the case contains toner and carrier in K (black). The pair of agitation members agitates the toner and carrier contained in the case and charges the toner. In this embodiment, the toner is positively charged. Note that the polarity of the toner is not limited to positive, but may also be negative. The magnet roller takes the toner and carrier agitated by the pair of agitation members and supplies the toner of them to the surface (outer circumferential surface) of the developing roller 343A.

The developing roller 343A develops the latent image formed on the photoreceptor drum 341 by using the charged toner. Specifically, application of a developing bias that is a high voltage between the developing roller 343A and the photoreceptor drum 341 from the power supply circuit forms a developing electric field, and the toner with electric charges moves to the photoreceptor drum 341 from the developing roller 343A. Accordingly, a toner image is formed on the surface of the photoreceptor drum 341.

The primary transfer roller 344 transfers the toner image formed on the surface of the photoreceptor drum 341 by the developing device 343 to the outer circumferential surface of an intermediate transfer belt 361 (see Fig. 2). Specifically, due to application of a transfer bias that is a high voltage between the photoreceptor drum 341 and the primary transfer roller 344 from the power supply circuit, a transfer electric field is formed and the toner with electric charges moves the intermediate transfer belt 361 from the photoreceptor drum 341. Accordingly, a toner image is formed (transferred) on an outer circumferential surface of the intermediate transfer belt 361.

The drum cleaner 345 cleans the surface of the photoreceptor drum 341 after the toner image is transferred by the primary transfer roller 344. For example, the drum cleaner 345 has a blade-like cleaning member and a conveying member. The cleaning member comes into contact with the surface of the photoreceptor drum 341 and removes the toner adhering to the surface. The conveying member conveys the toner removed by the cleaning member into a toner holding container.

The toner container 346 supplies the case of the developing device 343 with toner. In the image formation unit 34 that forms a K (black) toner image, the toner container 346 supplies a K (black) toner.

The toner images in the respective colors, which have been formed by the plurality of (here, four) image formation units 31 to 34, are transferred to the outer circumferential surface of the intermediate transfer belt 361, overlapping each other. Accordingly, a color image (toner image) is formed on the outer circumferential surface of the intermediate transfer belt 361.

As shown in Fig. 2, the intermediate transfer device 36 includes the intermediate transfer belt 361, a drive roller 362, a tension roller 363, a belt cleaning unit 364, and a density detection unit 365. The intermediate transfer device 36 conveys the toner image formed by the image formation units 31 to 34 to a transfer position P1 (see Fig. 2) for the secondary transfer roller 37 through the intermediate transfer belt 361.

The intermediate transfer belt 361 is an endless belt to which the toner images in the respective colors are transferred from the photoreceptor drums 311, 321, 331, and 341. As shown in Fig. 2, the intermediate transfer belt 361 are wrapped around the drive roller 362 and the tension roller 363, which are arranged apart from each other in a front-and-rear direction D2 of the image forming apparatus 10. The drive roller 362 rotates by a driving force received from a motor. Accordingly, the intermediate transfer belt 361 rotates to a direction of rotation D4 shown in Fig. 2. The toner image transferred to the outer circumferential surface of the intermediate transfer belt 361 is conveyed to the transfer position P1 for the secondary transfer roller 37 by the rotation of the intermediate transfer belt 361. The belt cleaning unit 364 cleans the outer circumferential surface of the intermediate transfer belt 361 after the toner image is transferred at the transfer position P1.

The secondary transfer roller 37 transfers the toner image formed on the outer circumferential surface of the intermediate transfer belt 361 to a sheet fed by the paper feeding unit 5. As shown in Fig. 2, the secondary transfer roller 37 is arranged at a position to face the tension roller 363 with the intermediate transfer belt 361 therebetween to come into contact with the outer circumferential surface of the intermediate transfer belt 361. The secondary transfer roller 37 is pushed toward the tension roller 363 by a biasing member. The secondary transfer roller 37 is electrically connected to a power supply circuit and transfers the toner image formed on the outer circumferential surface of the intermediate transfer belt 361 to a sheet passing through the transfer position P1 where the secondary transfer roller 37 and the intermediate transfer belt 361 are held in contact with each other, by application of a high voltage from the power supply circuit.

The fixing device 38 fuses and fixes the toner image, which has been transferred to the sheet by the secondary transfer roller 37, to that sheet.

For example, the fixing device 38 has a fixing roller and a pressure roller. The fixing roller is arranged to be held in contact with the pressure roller. The fixing roller heats and fixes the toner image, which has been transferred to the sheet, to the sheet. The pressure roller presses the sheet passing through a contact portion formed between the pressure roller and the fixing roller.

The sheet with the image formed is output to the paper receiving tray 39.

### [3] Configuration of light scanning apparatus

Next, referring to Fig. 1 and Figs. 3 to 5, a configuration of the light scanning device 4 will be described in more detail.

The light scanning device 4 forms a latent image on each of the photoreceptor drums 311, 321, 331, and 341 of the four image formation units 31 to 34. Therefore, as shown in Fig. 3, the light scanning device 4 outputs light beams B1, B2, B3, and B4 corresponding to the photoreceptor drums 311, 321, 331, and 341, respectively. The light beam B1 is emitted to the photoreceptor drum 311 in accordance with the input of image data for Y (yellow) and forms a latent image on the photoreceptor drum 311, which is an image carrier. The light beam B2 is emitted to the photoreceptor drum 321 in accordance with the input of image data for C (cyan) and forms a latent image on the photoreceptor drum 321, which is an image carrier. The light beam B3 is emitted to the photoreceptor drum 331 in accordance with the input of image data for M (magenta) and forms a latent image on the photoreceptor drum 331, which is an image carrier. The light beam B4 is emitted to the photoreceptor drum 341 in accordance with the input of image data for K (black) and forms a latent image on the photoreceptor drum 341, which is an image carrier.

In this manner, the light scanning device 4 is configured to be capable of outputting (emitting) a plurality of (here, four) light beams B1 to B4 for forming latent images to a plurality of (here, four) image formation units 31 to 34 corresponding to a plurality of colors (here, four colors), respectively. In this embodiment, the single light scanning device 4 outputs the plurality of (here, four) light beams B1 to B4 on different optical paths.

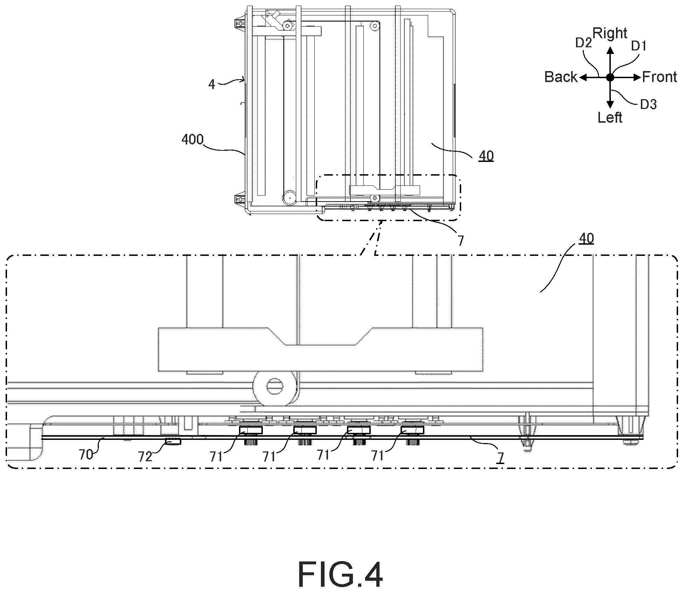

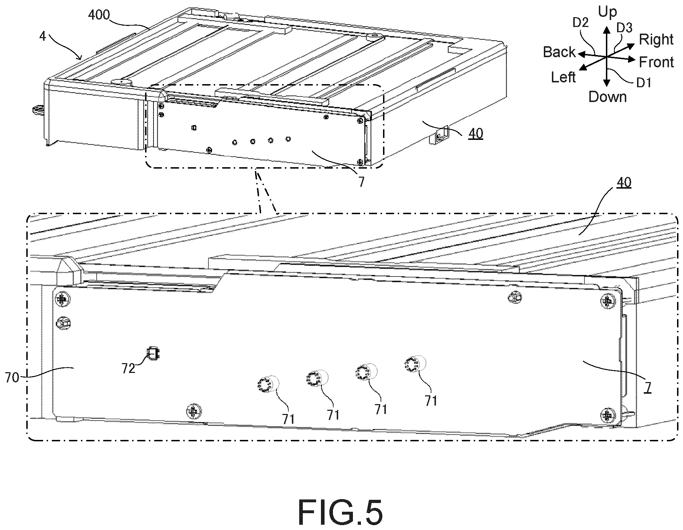

In this embodiment, the light scanning device 4 includes a board unit 7, a deflector 41, mirrors 42, and scanning lenses 43 as shown in Fig. 3. Fig. 3 schematically shows configurations of the respective members and does not show the exact shape and position relationships between the respective members. The deflector 41, the mirrors 42, and the scanning lenses 43 are housed in a casing 400 of a main body unit 40. As shown in Figs. 4 and 5, the board unit 7 is attached to an outer surface of the main body unit 40 (more specifically, the casing 400 of the main body unit 40). Broadly speaking, the light scanning device 4 includes the main body unit 40 including the deflector 41, the mirrors 42, and the scanning lenses 43 and the board unit 7 attached to the main body unit 40.

The board unit 7 includes a board 70 and light-emitting modules 71. The board unit 7 emits light from the light-emitting modules 71 to the deflector 41. In the example of Figs. 4 and 5, the board unit 7 is attached to a left side surface of the main body unit 40, which is substantially rectangular in a planar view (in a plan view). The board unit 7 emits light into the casing 400 through a light incident hole formed in the casing 400 of the main body unit 40. The board unit 7 is removably attached to the main body unit 40 with a fixing means, e.g., a screw. Therefore, for example, removing the board unit 7 from the main body unit 40 allows maintenance, replacement, and the like of only the board unit 7.

In this embodiment, the board unit 7 includes laser diodes as the light-emitting modules 71 and outputs laser light. The board unit 7 includes a plurality of (here, four) of light-emitting modules 71 and outputs laser light for forming latent images corresponding to the respective colors, Y (yellow), C (cyan), M (magenta), and K (black) from the plurality of light-emitting modules 71.

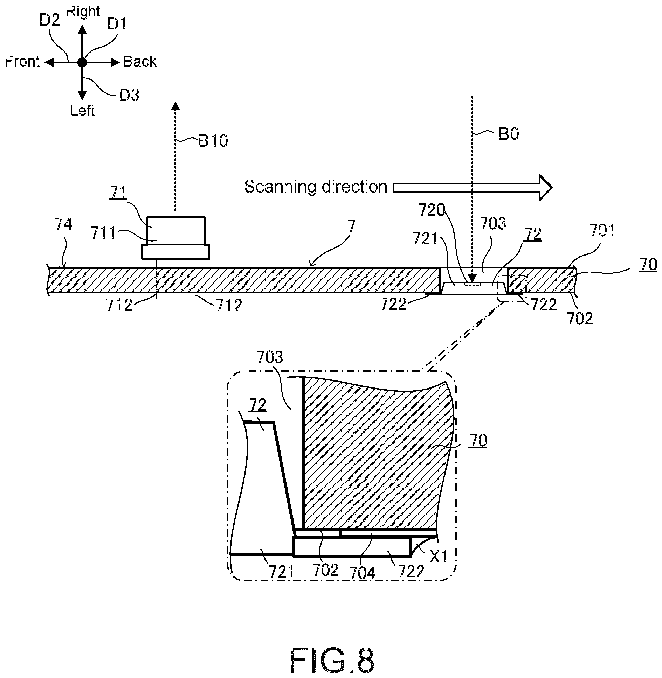

Moreover, the board unit 7 includes an optical sensor 72 in addition to the board 70 and the light-emitting modules 71. The optical sensor 72 is a synchronization detection sensor (BD sensor). The synchronization detection sensor (BD sensor) detects scanning light B0 (see Fig. 8) emitted from each light-emitting module 71 and outputs a reference signal to determine a writing timing of an image based on image data on the basis of a timing of detecting the scanning light B0. That is, writing timings of latent images on the photoreceptor drums 311, 321, 331, and 341 are determined depending on timings at which the optical sensor 72 receives (detects) the scanning light B0.

Here, the scanning light B0 that is detected by the optical sensor 72 is not direct light from the light-emitting modules 71 but light emitted from the light-emitting modules 71 and scanned (deflected) by the deflector 41 of the main body unit 40. More specifically, the main body unit 40 includes a synchronization detection mirror and reflects the scanning light B0, which has been scanned by the deflector 41 and has traveled an optical path out of a valid scanning area (area in which image data is actually written), on the synchronization detection mirror to enter the optical sensor 72. Therefore, the scanning light B0 enters the optical sensor 72 of the board unit 7 from the casing 400 through a light extraction hole formed in the casing 400 of the main body unit 40. The light extraction hole may be integrated with the light incident hole.

In this embodiment, the deflector 41 is, for example, a polygon mirror scanner and includes a polygon mirror 411 and a scanner motor 412 as shown in Fig. 3. That is, the deflector 41 rotates the polygon mirror 411 at the scanner motor 412, thereby scanning light from the board unit 7 in a main scanning direction along the rotational axis directions (left-and-right direction D3) of the photoreceptor drums 311, 321, 331, and 341. Note that the deflector 41 may be, for example, an acousto-optic element, a hologram scanner, a galvanometer mirror, or a micro-mirror scanner or the like using a micro-electromechanical system (MEMS), not limited to the polygon scanner. Moreover, the deflector 41 may be integrated with the board unit 7.

The mirrors 42 reflect light from the deflector 41. The scanning lenses 43 includes fθ lenses and the like. Accordingly, the light scanning device 4 outputs light from the board unit 7 toward the image formation units 31 to 34 through the deflector 41, the mirrors 42, and the scanning lenses. Here, the light scanning device 4 is capable of outputting a plurality of (here, four) light beams B1 to B4 and scans each of the light beams B1 to B4 in the main scanning direction, thereby forming a latent image corresponding to each color.

In short, the scanning light B0 of the light from the light-emitting modules 71, which has been deflected by the deflector 41 and has traveled on the optical path out of the valid scanning area, is reflected on the synchronization detection mirror and enters the optical sensor 72 while the light traveling on the optical paths within the valid scanning area is output as the light beams B1 to B4. That is, the light beams B1 to B4 emitted to the photoreceptor drums 311, 321, 331, and 341 for exposure are scanning light, but they are different from the scanning light B0 detected by the optical sensor 72.

### [4] Configuration of board unit

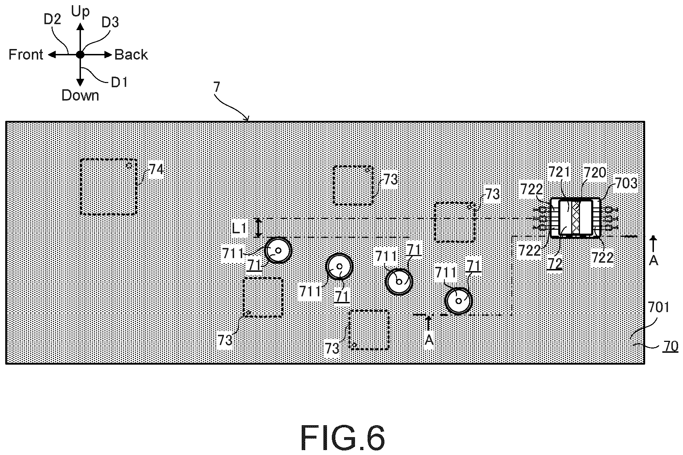

Next, referring to Figs. 6 to 8, a configuration of the board unit 7 in the light scanning device 4 will be described in more detail. Fig. 8 schematically shows a cross-sectional view of a cross section taken along the line A-A in Fig. 6.

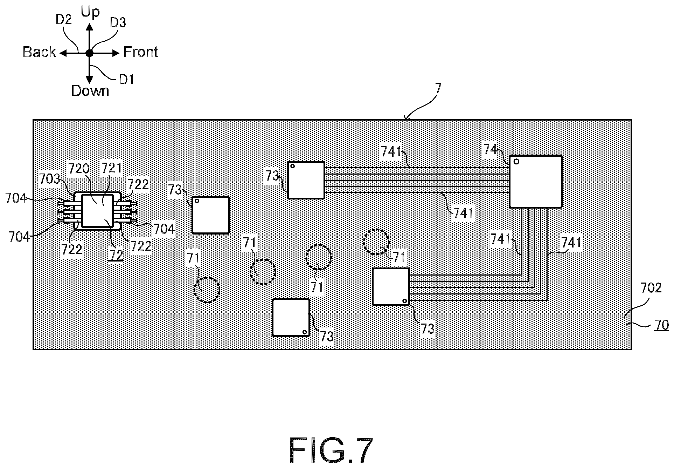

As shown in Figs. 6 and 7, the board unit 7 includes the board 70, the plurality of light-emitting modules 71, the optical sensor 72, a plurality of driver circuits 73, and a control circuit 74. Since the board unit 7 is a part of the light scanning device 4, it can be said that the light scanning device 4 includes the board 70, the plurality of light-emitting modules 71, the optical sensor 72, the plurality of driver circuits 73, and the control circuit 74. The board unit 7 further includes a signal processing circuit that performs signal processing on the output of the optical sensor 72, optical elements, such as a collimating lens, an aperture, and a mirror, and the like.

The board 70 is a member on which various electronic components can be mounted and is a printed circuit board including an electrically insulative board body and electrically conductive wires formed on the surface of the board body or inside the board body. The board 70 includes not only a printed circuit board formed in a literally board shape, but also a three-dimensionally molded board, e.g., an molded interconnect device (MID). Here, the board 70 is, for example, a rectangular board long in the front-and-rear direction D2 and is a printed circuit board with wires formed on at least one surface thereof. Faces (surfaces) on both sides in a thickness direction (left-and-right direction D3) of the board 70 will be referred to as a first surface 701 (see Fig. 6) and a second surface 702 (see Fig. 7), respectively. That is, the board 70 has the first surface 701 and the second surface 702. Here, the first surface 701 is a surface facing the main body unit 40 side (right-hand side) in the left-and-right direction D3, which is the thickness direction of the board 70, and the second surface 702 is a surface facing on a side (left-hand side) opposite to the main body unit 40.

Four light-emitting modules 71 are provided for one main body unit 40 in order to form latent images corresponding to the respective colors, Y (yellow), C (cyan), M (magenta), and K (black). Since the four light-emitting modules 71 have a common configuration, a configuration of the light-emitting module 71 will be described below as an example unless the four light-emitting modules 71 are distinguished.

Only one optical sensor 72 is provided for one main body unit 40. The optical sensor 72 has a light-receiving part 720 and detects light (scanning light B0) at the light-receiving part 720. The optical sensor 72 is constituted by a photoelectric conversion element that outputs an electrical signal in accordance with light (scanning light B0) which has entered the light-receiving part 720. The optical sensor 72 is, for example, a photodiode, a phototransistor, or a photo integrated circuit (IC).

The driver circuit 73 drives the light-emitting module 71. That is, the driver circuit 73 causes the light-emitting module 71 to emit light by supplying electrical current to the light-emitting module 71. In this embodiment, four driver circuits 73 are provided for one main body unit 40 in order to drive the four light-emitting modules 71. That is, the four driver circuits 73 correspond one-to-one to the four light-emitting modules 71 and drive the corresponding light-emitting modules 71.

Only one control circuit 74 is provided for one main body unit 40. The control circuit 74 controls a plurality of (here, four) driver circuits 73. The control circuit 74 is electrically connected to each driver circuit 73 through an electrically conductive wire (signal line) formed on the board 70. The control circuit 74 individually controls each driver circuit 73 by for example a control signal, such as low voltage differential signaling (LVDS).

By the way, as a related technology, a light scanning apparatus that is used for an image forming apparatus and scans a circumferential surface of a photoreceptor (photoreceptor drum) with scanning light (laser light) for exposure, thereby forming a latent image on the circumferential surface of the photoreceptor, is known. The light scanning apparatus includes a light-emitting module (laser light source) mounted on a board (circuit board). The light scanning apparatus reflects light emitted from the light-emitting module through a polygon mirror and scans the scanning light along a main scanning direction.

The light scanning apparatus further includes an optical sensor (BD sensor) that detects a deflected light flux and synchronizes a writing timing, which is a timing to start emission of the deflected light flux to the circumferential surface of the photoreceptor with respect to a main scanning line. In the light scanning apparatus according to the related technology, the light-emitting module and the optical sensor are mounted on the same surface of the board.

However, in the configuration of the related technology, light (scanning light) from the light-emitting module may be reflected by a connection pad for bonding the optical sensor on the board, a bonding member, such as a solder, for bonding the optical sensor on the board, or a terminal of the optical sensor, with the result that stray light may be generated. The generated stray light may lead to erroneous detection of the optical sensor.

In view of this, the light scanning device 4 according to this embodiment makes it difficult for erroneous detection of the optical sensor 72 due to stray light to occur with a configuration described below.

That is, the light scanning device 4 according to this embodiment includes the board 70, the light-emitting modules 71, the driver circuits 73, the control circuit 74, and the optical sensor 72. The board 70 has the first surface 701 and the second surface 702 on the both sides in the thickness direction. The light-emitting modules 71 are mounted on the board 70 and output light to the side of the first surface 701. The driver circuits 73 are mounted on the board 70 and drive the light-emitting modules 71. The control circuit 74 is mounted on the board 70 and controls the driver circuits 73. The optical sensor 72 is mounted on the board 70 and receives, from the side of the first surface 701, the scanning light B0 from the light-emitting modules 71 as a light source. The board 70 has connection pads 704 (see Fig. 7) that electrically connect the optical sensor 72 on the second surface 702. In other words, the optical sensor 72 is mounted on the second surface 702 of the board 70, which is located on a side opposite to the first surface 701 where light from the light-emitting modules 71 is output.

With this configuration, the light-emitting modules 71, the driver circuits 73, the control circuit 74, and the optical sensor 72 are all mounted on the same board 70. Therefore, the number of boards 70 included in the light scanning device 4 can be kept small. In addition, signals, e.g., LVDS, which are output to the driver circuits 73 from the control circuit 74 can also be transmitted through the wires formed on the board 70. Therefore, as compared to a case where wires (harnesses) passing through the outside of the board 70, e.g., flexible flat cables (FFC) or loose wires, for the signals output to the driver circuit 73 from the control circuit 74, the wire length can be kept relatively short, and unnecessary radiation from the signal lines (wires) can be suppressed. Orienting a mounting surface of the optical sensor 72 in a direction opposite to an emission direction of light from the light-emitting modules 71 can suppress the generation of stray light due to reflection of light from the light-emitting modules 71 (scanning light B0) on the connection pads 704, a bonding member X1 (see Fig. 8), such as a solder, which bonds the optical sensor 72 to the board 70, or terminals 722 of the optical sensor 72 (see Fig. 7). As a result, the light scanning device 4 and the image forming apparatus 10 in which erroneous detection of the optical sensor 72 due to stray light does not easily occur can be provided.

Hereinafter, a more detailed configuration of the board unit 7 will be described.

A through-hole 703 is formed in the board 70. The through-hole 703 extends from the first surface 701 to the second surface 702. That is, the board 70 includes the through-hole 703 that goes through the board 70 in the thickness direction (left-and-right direction D3). The through-hole 703 is a hole for enabling the scanning light B0 that enters the board 70 from the side of the first surface 701 to be detected by the optical sensor 72 located on the side of the second surface 702. That is, the scanning light B0 from the side of the first surface 701 enters the optical sensor 72 on the side of the second surface 702 through the through-hole 703. Here, the through-hole 703 has, for example, a substantially square shape in a planar view. That is, the opening surface has a substantially square shape.

The electronic components such as the light-emitting modules 71 and the optical sensor 72 included in the board unit 7 are mounted on the board 70. The driver circuits 73, the control circuit 74, and an integrated circuit (IC) that constitutes the signal processing circuit and the like are also mounted on the board 70. The term "mounting" set forth in the present disclosure means mechanical and electrical connection to the board 70. More specifically, "mounting" of parts on the board 70 is realized by mechanically connecting terminals of the parts to the wires formed on the board 70 and the like and also electrically connecting them with bonding members (electrically conductive pastes, e.g., solders or silver pastes). For example, the light-emitting modules 71 are mounted on the board 70 by an insertion mount technology (IMT). That is, the light-emitting modules 71 are mounted on the surface (mounting surface) of the board 70 in a state in which the plurality of terminals 712 is inserted in mounting holes of the board 70 from the side of the surface (mounting surface) of the board 70. On the other hand, the optical sensor 72 is mounted on the board 70 by a surface mount technology (SMT). That is, the optical sensor 72 is mounted on the surface (mounting surface) of the board 70 in a state in which a plurality of terminals 722 is placed facing the surface (mounting surface) of the board 70. Note that not limited to this example, for example, the light-emitting modules 71 may be mounted on the board 70 by the surface mount technology.

The laser diodes (LDs) that supplies a semiconductor with electrical current to cause laser oscillation are used as the light-emitting modules 71. In this embodiment, each light-emitting module 71 includes a metal package 711 formed in a substantially cylindrical shape and the plurality of terminals 712 (see Fig. 8). The light-emitting module 71 houses, in the package 711, a light-emitting element that is a main body of the laser diode, a photodiode (PD) for monitoring, and the like. A light-emitting port for extracting a light beam B10 (see Fig. 8) is formed at the center of a top surface of the package 711. The plurality of terminals 712 protrude from a back surface of the package 711 (surface on a side opposite to the light-emitting port).

The light-emitting module 71 is a "part with a lead" inserted and mounted on the board 70. Here, the light-emitting module 71 is mounted on the board 70 in a state in which the plurality of terminals (lead terminals) 712 is inserted in the board 70 from the side of the first surface 701. Therefore, the package 711 of the light-emitting module 71 is located on the side of the first surface 701 as shown in Fig. 8, and it is mounted in an orientation to output the light beam B10 to the side of the first surface 701 (to the right-hand side) along a normal direction of the first surface 701. The plurality of terminals 712 is bonded to the wires on the board 70 by soldering on a side opposite to the package 711 with the board 70 therebetween, i.e., on the side of the second surface 702.

Here, the light-emitting module 71 has a multi-beam structure capable of outputting a plurality of light beams B10. That is, the light-emitting module 71 has two or more light-emitting elements constituted by laser diodes in the package 711 and is capable of causing the plurality of light-emitting elements to emit light individually. By configuring the light-emitting module 71 to emit multiple beams in this manner, the light scanning device 4 can achieve both high speed and high resolution in terms of latent image formation. In particular, the multi-beam structure significantly increases the effect of suppressing unnecessary radiation from the signal lines. Note that it is not necessary for the light-emitting module 71 to have the multi-beam structure.

More specifically, the four light-emitting modules 71 are arranged on a single straight line as shown in Fig. 6. Additionally, in this embodiment, the distance between the adjacent light-emitting modules 71 is uniform. Note that it is not necessary to arrange the four light-emitting modules 71 on the single straight line. The four light-emitting modules 71 may be arranged in a circular arc shape, a free curve shape, or a zigzag shape, for example. Moreover, it is not necessary that the distance between the adjacent light-emitting modules 71 be uniform.

Moreover, as shown in Fig. 6, in this embodiment, the four light-emitting modules 71 are arranged, deviated in position from each other in the up-and-down direction D1, to be located to be gradually lower from the left-hand side (front side) to the right-hand side (back side) in the figure. Accordingly, the optical paths of light from the plurality of light-emitting modules 71 can be deviated in the up-and-down direction D1, and interference of the light from the plurality of light-emitting modules 71 can be avoided.

The optical sensor 72 includes a resin package 721 having a substantially square shape in a planar view and the plurality of terminals 722. The optical sensor 72 houses, in the package 721, a light-receiving element (photoelectric conversion element) that is a main body of the optical sensor 72. The light-receiving part 720 is arranged in a part of the surface of the package 721 and the optical sensor 72 detects the light (scanning light B0) that enters the light-receiving part 720. The plurality of terminals 722 protrudes to lateral sides (front-and-rear direction D2 in Fig. 8) from parts of side surfaces of the package 721, which are adjacent to a back surface of the package 721 (surface on a side opposite to the light-receiving part 720).

The optical sensor 72 is a "surface mount part" that is surface-mounted on the board 70. Here, the optical sensor 72 is mounted on the board 70 by inserting at least a part of the package 721 in the through-hole 703 from the side of the second surface 702 in a state in which the light-receiving part 720 is oriented to the side of the board 70. That is, the optical sensor 72 includes the light-receiving part 720 and is mounted on the side of the second surface 702 of the board 70. The optical sensor 72 receives the scanning light B0, which has entered the through-hole 703 from the side of the first surface 701, at the light-receiving part 720. Specifically, as shown in Fig. 8, the optical sensor 72 is mounted on the side of the second surface 702 of the board 70 in an attitude in which the light-receiving part 720 is oriented in the same orientation as the first surface 701 of the board 70. Here, the light-receiving part 720 of the optical sensor 72 is visible from the side of the first surface 701 via the through-hole 703. That is, the light-receiving part 720 of the optical sensor 72 is exposed to the side of the first surface 701. Therefore, the optical sensor 72 is capable of receiving the scanning light B0, which has entered the through-hole 703 from the side (right side) of the first surface 701, at the light-receiving part 720. The plurality of terminals 722 is bonded to the connection pads 704 provided in the second surface 702 of the board 70 in the periphery of the through-hole 703 on the side of the second surface 702 by soldering. The connection pads 704 are some of electrically conductive wires formed on the second surface 702 of the board 70.

Here, the light-receiving part 720 of the optical sensor 72 is long in a direction orthogonal to a scanning direction of the scanning light B0. That is, the optical sensor 72 is arranged so that a longitudinal direction of the light-receiving part 720 coincides to the direction orthogonal to the scanning direction of the scanning light B0. For example, a dimension in the longitudinal direction of the light-receiving part 720 (direction orthogonal to the scanning direction) is about 3 mm and a dimension in a short side direction (scanning direction) of the light-receiving part 720 is about 0.5 mm.

The "scanning direction" of the scanning light B0 set forth in the present disclosure means the scanning direction of the scanning light B0 emitted to the board unit 7 and it is different from the main scanning direction (main scanning direction along the rotational axis directions of the photoreceptor drums 311, 321, 331, and 341). That is, the scanning direction of the scanning light B0 may be the same direction as the main scanning direction or may be a direction different from the main scanning direction. In this embodiment, for example, as shown in Fig. 8, the scanning direction of the scanning light B0 is a direction along the longitudinal direction of the board 70, i.e., the front-and-rear direction D2.

As described above, in this embodiment, the board 70 has the through-hole 703 extending from the first surface 701 to the second surface 702. The optical sensor 72 is mounted on the side of the second surface 702 of the board 70 and receives the scanning light B0 that enters the through-hole 703 from the side of the first surface 701. Accordingly, the optical sensor 72 is capable of connecting its terminals 722 to the connection pads 704 on the side of the second surface 702 of the board 70 while receiving the scanning light B0 that enters from the side of the first surface 701.

Moreover, each driver circuit 73 is realized by an integrated circuit (IC). Each driver circuit 73 includes a resin package having a substantially square shape in a planar view and houses a semiconductor chip in the package. Each driver circuit 73 includes a plurality of terminals (lead terminals) on a back surface of the package.

In this embodiment, each light-emitting module 71 has a multi-beam structure capable of outputting a plurality of light beams, and therefore the driver circuit 73 is capable of individually driving two or more (here, four) light-emitting elements included in one light-emitting module 71. The driver circuits 73 operate in response to control signals from the control circuit 74 and drive the plurality of light-emitting modules 71.

The control circuit 74 is realized by an integrated circuit (IC). The control circuit 74 includes a resin package having a substantially square shape in a planar view and houses a semiconductor chip in the package. The control circuit 74 includes a plurality of terminals (lead terminals) on a back surface of the package.

The driver circuit 73 and the control circuit 74 are both "surface mount parts" that are surface-mounted on the board 70. Here, the driver circuit 73 and the control circuit 74 are mounted on the side of the second surface 702 of the board 70 in a state in which the back surface (terminals) of the package are oriented to the side of the board 70. That is, the driver circuit 73 and the control circuit 74 are bonded to connection pads provided on the second surface 702, which is a surface of the board 70 in the thickness direction, by soldering.

In short, in this embodiment, the plurality of driver circuits 73 and the control circuit 74 are, as shown in Fig. 7, surface-mounted on the same second surface 702 of the board 70 as the optical sensor 72. As shown in Fig. 7, the control circuit 74 is electrically connected to each driver circuit 73 with a plurality of wires 741. The plurality of wires 741 is electrically conductive wires formed on the second surface 702 of the board 70. In Fig. 7, only the wires 741 that connect some of the driver circuits 73 to the control circuit 74 are shown and the illustration of the other wires is omitted.

Moreover, as shown in Fig. 7, the four driver circuits 73 are arranged so that two driver circuits 73 are located on either side in the up-and-down direction D1 of a virtual straight line on which the four light-emitting modules 71 are aligned. In addition, as shown in Fig. 7, the two driver circuit 73 located in position upper or lower than the four light-emitting modules 71 are obliquely arranged along the direction in which the four light-emitting modules 71 are arranged. That is, the driver circuits 73 on the left-hand side (back side) in the figure are arranged, deviated in position from each other in the up-and-down direction D1, so that the driver circuits 73 on the left-hand side (back side) are located in positions lower than the driver circuits 73 on the right-hand side (front side).

Accordingly, the wire length between the driver circuit 73 and the corresponding light-emitting module 71 can be reduced as much as possible, and the responsiveness of the control on the light-emitting module 71 by the driver circuit 73 can be improved. Note that the plurality of light-emitting modules 71 and the plurality of driver circuits 73 only need to be substantially symmetric. In a case where the plurality of light-emitting modules 71 and the plurality of driver circuits 73 are deviated from symmetric positions with an amount of deviation, which is substantially a tolerance, they can be said to be symmetric.

Here, the plurality of (here, four) light-emitting modules 71, the optical sensor 72, the plurality of (here, four) driver circuits 73, and the control circuit 74 are all mounted on the single board 70. That is, at least a plurality of light-emitting modules 71 and a plurality of driver circuits 73 are mounted on the board 70 to correspond to the scanning light B0 for a plurality of colors. With this configuration, the light-emitting modules 71 and the driver circuits 73 for outputting the scanning light B0 in the plurality of colors can be collected on the single board 70, and downsizing of the light scanning device 4 can be easily achieved. Moreover, the light scanning device 4 in which the light-emitting modules 71 are provided for the plurality of colors significantly increases the effect of suppressing unnecessary radiation from the signal lines.

In this embodiment, the same number of (here, four) light-emitting modules 71 and the same number of (here, four) driver circuits 73 are mounted on the board 70, though not limited to this example. For example, in a case where one driver circuit 73 drives two light-emitting modules 71, the four light-emitting modules 71 and the two driver circuits 73 are mounted on the board 70.

Moreover, in this embodiment, the light-emitting modules 71 serving as the light sources of the scanning light B0 are, as shown in Fig. 6, located in lower positions than the optical sensor 72 that receives the scanning light B0 in a longitudinal direction (up-and-down direction D1) of the board 70. Specifically, an upper end position of the light-emitting module 71 of the plurality of (four) light-emitting modules 71 at a front end (left end in Fig. 6), which is located in the uppermost position, is located in a lower position than the center of the optical sensor 72 by a distance L1.

Here, the photoreceptor drums 311, 321, 331, and 341 are located in positions upper than the light scanning device 4 (see Fig. 1). Deflecting the light beam B10 in an opposite direction (i.e., lower) to the photoreceptor drums 311, 321, 331, and 341 in order to make the scanning light B0 incident upon the optical sensor 72 may lead to stray light, and may thus lead to erroneous detection of the optical sensor 72. In this embodiment, the optical sensor 72 is located on the same side (upper side) as the photoreceptor drums 311, 321, 331, and 341 in the up-and-down direction D1 as viewed from the light-emitting modules 71, and therefore such stray light can be suppressed.

### [5] Modified examples

The plurality of components included in the image forming apparatus 10 may be separately provided in a plurality of casings. For example, the image reading unit 2 and the image forming unit 3 may be provided in different casings.

Moreover, in Embodiment 1, the four light-emitting modules 71 are provided in order to form latent images corresponding to the respective colors, Y, C, M and K, though not limited to this configuration. For example, two or more light-emitting modules 71 may be provided for the respective colors.

Moreover, in Embodiment 1, the only one light scanning device 4 (the main body unit 40 and the board unit 7) is provided for the four image formation units 31 to 34 corresponding to the four colors, though not limited to this configuration. For example, one light scanning device 4 (the main body unit 40 and the board unit 7) may be provided for one, two, or three image formation units corresponding to one color, two colors, or three colors. For example, in a case where the light scanning device 4 is provided for each of the image formation units for the respective colors, four light scanning devices 4 (the main body unit 40 and the board unit 7) are provided for the four image formation units 31 to 34.

### [Notes of invention]

The outline of the invention extracted from the above-mentioned embodiments will be given below. Note that the configurations and processing functions described in the following notes can be arbitrarily selected and combined.

### <Note 1>

A light scanning apparatus, including:
a board having a first surface and a second surface on both sides in a thickness direction;
a light-emitting module that is mounted on the board and outputs light to a side of the first surface;
a driver circuit that is mounted on the board and drives the light-emitting module;
a control circuit that is mounted on the board and controls the driver circuit; and
an optical sensor that is mounted on the board and receives, from the side of the first surface, scanning light from the light-emitting module as a light source, in which
the board has a connection pad that electrically connects the optical sensor on the second surface.

### <Note 2>

The light scanning apparatus according to Note 1, in which
the board has a through-hole that extends from the first surface to the second surface, and
the optical sensor that is mounted on a side of the second surface of the board and receives the scanning light that enters the through-hole from the side of the first surface.

### <Note 3>

The light scanning apparatus according to Note 1 or 2, in which
the light-emitting module serving as a light source of the scanning light is located in a position lower than the optical sensor that receives the scanning light in a longitudinal direction of the board.

### <Note 4>

The light scanning apparatus according to any of Notes 1 to 3, in which
the light-emitting module and the driver circuit comprise a plurality of light-emitting modules and a plurality of driver circuits respectively mounted on the board to correspond to scanning light for a plurality of colors.

### <Note 5>

The light scanning apparatus according to any of Notes 1 to 4, in which
the light-emitting module is a multi-beam structure with two or more light-emitting elements.

### <Note 6>

An image forming apparatus, including:
a light scanning apparatus according to any of Notes 1 to 5; and
an image carrier on which a latent image is formed by a light beam output from the light scanning apparatus.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A light scanning apparatus, comprising:
a board having a first surface and a second surface on both sides in a thickness direction;
a light-emitting module that is mounted on the board and outputs light to a side of the first surface;
a driver circuit that is mounted on the board and drives the light-emitting module;
a control circuit that is mounted on the board and controls the driver circuit; and
an optical sensor that is mounted on the board and receives, from the side of the first surface, scanning light from the light-emitting module as a light source, wherein
the board has a connection pad that electrically connects the optical sensor on the second surface.

2. The light scanning apparatus according to claim 1, wherein
the board has a through-hole that extends from the first surface to the second surface, and
the optical sensor that is mounted on a side of the second surface of the board and receives the scanning light that enters the through-hole from the side of the first surface.

3. The light scanning apparatus according to claim 1 or 2, wherein
the light-emitting module serving as a light source of the scanning light is located in a position lower than the optical sensor that receives the scanning light in a longitudinal direction of the board.

4. The light scanning apparatus according to claim 1 or 2, wherein
the light-emitting module and the driver circuit comprise a plurality of light-emitting modules and a plurality of driver circuits respectively mounted on the board to correspond to scanning light for a plurality of colors.

5. The light scanning apparatus according to claim 1 or 2, wherein
the light-emitting module is a multi-beam structure with two or more light-emitting elements.

6. An image forming apparatus, comprising:
a light scanning apparatus according to claim 1; and
an image carrier on which a latent image is formed by a light beam output from the light scanning apparatus.
